# FASCICULE DE BREVET EUROPEEN

(11) **EP 2 462 189 B1**
(45) Date de publication et mention de la délivrance du brevet: **26.03.2014**
(21) Numéro de dépôt: 10731749.7
(22) Date de dépôt: 14.07.2010
(51) Int. Cl.: C08J 11/08

(54) **PURIFICATION D'UN FLUX DE POLYMÈRE CONVENTIONNEL CONTAMINÉ PAR DU PLA**
REINIGUNG EINES HERKÖMMLICHEN PLA-KONTAMINIERTEN POLYMERFLUSSES
PURIFICATION OF A CONVENTIONAL POLYMER FLOW CONTAMINATED WITH PLA

(30) Priorité: 06.08.2009 BE 200900475
(43) Date de publication de la demande: 13.06.2012
(73) Titulaire: Futerro S.A., 7760 Escanaffles (BE)
(72) Inventeur: COSZACH, Philippe, B-7760 Escanaffles (BE); WILLOCQ, Jonathan, B-7760 Escanaffles (BE)
(74) Mandataire: Leyder, Francis
(86) Numéro de dépôt international: PCT/EP2010/060142
(87) Numéro de publication internationale: WO 2011/015433

(56) Documents cités:
- WO-A1-01/47860
- WO-A2-2005/013810
- JP-A- 2007 277 389
- US-B1- 6 844 307

## Description

### Domaine de l'invention

La présente invention se rapporte à un procédé de purification d'un flux de polymère conventionnel contaminé par du PLA afin de lui permettre de rentrer sans encombre dans les filières de recyclage classique.

### Etat de l'art

La gestion de la fin de vie des matières plastiques est un élément très important dans la viabilité d'un plastique sur le marché (par exemple, le PVC a été retiré du marché des bouteilles en plastique faute d'un système de recyclage efficace). Tout comme les plastiques d'origine non renouvelables (issus de la pétrochimie) et bien que leurs filières de fin de vie soient plus nombreuses, les biopolymères sont confrontés à des défis techniques lorsqu'il s'agit de cette gestion de fin de vie. Notamment lorsque l'on parle de volumes très importants, générés dans les marchés de commodité. C'est pourquoi, il est important de traiter ce problème.

Des filières déjà bien en place existent pour le recyclage des polymères de commodité (PET, PP, ...), à l'exemple du recyclage mécanique du PET. Les bouteilles en PET sont transformées par des recycleurs en paillettes, granules propres ou immédiatement en produits semi-finis. En 2007, tout le PET mis sur le marché par Fost Plus (qui assure la promotion, coordonne et finance la collecte sélective, le tri et le recyclage des emballages ménagers en Belgique) a de nouveau été traité intégralement. Toujours en Belgique, le taux de résidu lors du recyclage mécanique des bouteilles en PET est relativement faible, soit 15%. Dans certains pays ce taux peut avoisiner les 8%.

D'autre part les biopolymères (issus de matières premières renouvelables), et plus particulièrement le PLA, poly(acide lactique) ou encore acide polylactique, se développent et étendent leur spectre applicatif. A ce jour, le PLA a démontré de nombreux avantages tels que la transparence ou l'opacité, la flexibilité ou la rigidité (semblable à celle de polyesters), mais aussi la brillance comparable à celle du polystyrène. Tous ces avantages conduisent inévitablement au succès de ce polymère dans le domaine de l'emballage. De plus, le PLA est particulièrement apprécié pour l'emballage alimentaire grâce à ses propriétés barrières aux arômes et à l'odeur ainsi qu'à sa résistance accrue aux attaques des graisses. Un nombre grandissant d'application fleurit sur le marché à l'image des barquettes rigides pour produit frais, des films d'emballage pour salade, des bouteilles et des ustensiles à usage unique (assiettes, gobelets, couverts, ...).

L'arrivée grandissante de ces nouveaux matériaux dans des usages quotidiens engendre inévitablement quelques problèmes au niveau de la gestion de fin de vie des polymères plus « conventionnels ». En effet, il est possible d'observer une contamination des flux de bouteilles en PET par des bouteilles en PLA qui commencent à apparaître sur le marché, car les techniques de tri généralement mises en place ne font pas une distinction aisée et absolue entre le polymère d'origine pétrochimique et le biopolymère. Il existe évidemment des techniques de séparation s'appuyant sur les propriétés optiques (et non physique car les densités des deux polymères sont fort semblables), mais celles-ci ne sont pas efficace à 100% et ne sont à l'heure actuelle que très rarement installées dans les centres de tri.

Or les voies de recyclage du PET, bien que très efficaces, sont assez complexes et sensibles. En effet, il a été démontré que la présence de PLA, même dans des teneurs faibles de l'ordre du pourcent, dérègle complètement le procédé. En effet le taux de résidu est plus important (le rendement est donc moins bon) et la qualité du PET obtenu au final est altérée.

L'objet de la présente invention consiste à apporter une solution à cette problématique en prétraitant le flux de polymère en vue de le débarrasser, au minimum, de son contenu en PLA.

### Brève description de l'invention

La présente invention a pour objet un procédé de purification d'un flux de polymère conventionnel (PE, PP, PET, PVC, etc.) contaminé par maximum 50% en poids de PLA. Le procédé de la présente invention comprend une mise en suspension d'un mélange de polymères contenant une fraction pondérale d'au maximum 50% de poly (acide lactique) PLA dans un ester lactique, avec solubilisation de la fraction PLA dans l'ester lactique. L'ester lactique, le PLA et autres impuretés dissoutes sont ensuite récupérés pour un traitement séparé et ultérieur. Le polymère non dissous est récupéré pour être traité via les voies classiques de recyclage.

### Description détaillée de l'invention

Le procédé de l'invention comprend successivement les étapes suivantes. On effectue tout d'abord un broyage du flux de polymère courant (PE, PP, PET, PVC, etc.) comportant au maximum 50% en poids de PLA. On utilise un ester lactique pour mettre le PLA ainsi que d'autres contaminants solubles en solution et ainsi éliminer ces derniers, de sorte à obtenir des polymères répondant aux exigences des recycleurs conventionnels. On distingue donc plusieurs étapes dont la mise en suspension simultanément à la solubilisation, d'une part, et la séparation, d'autre part, qui sont les étapes essentielles du procédé.

### 1. Le broyage des déchets contenant du PLA

Dans le cadre de l'invention présentée, le flux de polymères conventionnels (PE, PP, PET, PVC, etc.) contaminé par du PLA est broyé selon diverses techniques, comme par exemple le broyage par cisaillement, par impact, à sec ou sous eau. Dans le cadre de l'invention, une ou plusieurs étapes de broyage peuvent être envisagées, leur nombre étant fonction du produit de départ mais également du coût de ces opérations et de la granulation finale visée.

Il est également possible de pré ou post traiter ce mélange de polymères contenant du PLA notamment en procédant à un lavage à l'eau ou autres solutions.
Si la matière du flux à traiter a une surface spécifique adéquate pour démarrer la mise en solution/suspension, on peut supprimer cette étape de broyage sans se départir du procédé de la présente invention, conformément à un autre mode de réalisation.
Suite à cette étape de broyage, lorsqu'elle est réalisée, et pour favoriser l'automatisation et la processabilité, une étape de densification peut être envisagée afin de compacter la matière mais cela pourrait engendrer un ralentissement de l'étape suivante. Ceci constitue encore un autre mode de réalisation de l'invention.

### 2. La mise en solution du PLA et d'autres solubles dans un ester lactique

On met ensuite le flux de polymères contaminé par le PLA, broyé ou non et compacté ou non, en contact avec ester lactique. Cet ester lactique peut être un lactate d'alkyle dont le radical alkyle contient de 1 à 12 atomes de carbone. Le lactate d'alkyle préférentiellement choisi parmi le lactate de méthyle, d'éthyle, de propyle, de butyle ou encore d'hexyle.
Cette étape est préférentiellement réalisée sous agitation.
Le rapport pondéral flux de polymère sur lactate d'alkyl est préférentiellement compris entre 0,1 et 1, dépendant de la densité et du taux de contamination du flux traité. Ce rapport sera de préférence choisi entre 0,5 et 1.

Les conditions de température se situent entre 50 °C et la température de fusion du polymère à purifier.
La pression dépend fortement de la température de travail et peut se situer entre 0,05 et 20 bars, de préférence entre 1 et 10 bars, et encore de façon préférée entre 1 et 5 bars.
Les conditions de pression et de température ainsi que le ratio pondéral flux de polymère sur ester lactique sont choisis de manière A ce que le procédé soit économiquement viable et non dénaturant pour le polymère à récupérer. Un traitement à pression atmosphérique sera donc préféré, pression qui sera atteinte à une température inférieure ou légèrement inférieure à la température d'ébullition de l'ester lactique utilisé : par exemple entre 50°C et la température d'ébullition du lactate d'alkyle utilisé.
La mise en solution du PLA dans ces condition étant tributaire de la température, le temps de contact ira de quelques minutes à quelques heures. Lors d'un travail à haute température on privilégiera un temps de contact court afin d'éviter toute dégradation du polymère traité.

### 3. Récupération du polymère purifiés par séparation

Le flux de polymère traité se présente à présent sous forme d'une suspension. Il est débarrassé de l'ester lactique, du PLA et de toutes impuretés dissoutes au moyen d'une séparation. Cette séparation est obtenue par filtration ou tout autre moyen permettant une séparation solide/liquide.
Dans les étapes de recyclage classique, le polymère récupéré peut soit être utilisé tel quel, soit être lavé à l'eau ou autre afin d'éliminer l'ester lactique résiduel ou encore être séché après lavage à l'eau ou autre, conformément à d'autres formes de réalisation.

### 4. Traitement ultérieur de l'ester contenant le PLA

Le filtrat de l'étape 3 peut être par exemple traité selon le procédé de recyclage chimique du PLA par alcoolyse, afin de produire un ester lactique à partir du PLA. L'alcool utilisé pour ce procédé de dépolymérisation par transestérification sera préférentiellement celui correspondant à l'ester lactique utilisé pour la purification du flux de polymère.

D'autres détails et particularités de l'invention, donnés ci-après à titre d'exemples non-limitatifs, ressortent de la description comme quelques formes possibles de sa réalisation.

### Exemple 1 : Test de solubilisation dans un ester lactique

Dans le cadre de cet exemple, des gobelets en PLA broyés ont été mis en solution dans différents esters d'acide lactique, le lactate de méthyle, le lactate d'éthyle et le lactate de n-butyle, à l'étuve à 130°C, à pression atmosphérique et sans agitation. Les résultats de ces mises en solution sont repris dans le tableau 1.

**Tableau 1 : Mise en solution de PLA dans différents esters d'acide lactique**

| Test | Ester lactique de | Rapport pondéral PLA/ester lactique | Temps (h) | Mise en solution complète |
|---|---|---|---|---|
| 1 | méthyle | 1 | 1,5 | oui |
| 2 | éthyle | 1 | 2 | oui |
| 3 | n-butyle | 1 | 3 | oui |

Il a également été tenté de mettre en solution différents polymères conventionnels dans le lactate d'éthyle à 130°C, à pression atmosphérique, pendant 4h et sans agitation. Les résultats sont repris dans le tableau 2.

**Tableau 2 : Mise en solution dans du lactate d'éthyle de différents polymères broyés**

| Polymère | Rapport pondéral polymère/LEt | Mise en solution | Aspect du mélange |
|---|---|---|---|
| PEHD | 1 | non | suspension |
| PP | 0,14 | non | suspension |
| PET | 0,37 | non | suspension |
| PLA* | 1 | oui | solution |

| | | | |
|---|---|---|---|
| * donné à titre d'exemple comparatif | | | |

Cet exemple tend à prouver la possibilité de solubiliser uniquement le PLA sans altérer le polymère qui doit être récupéré. Les suspensions de PEHD, PP et PET ont ensuite été filtrées, séchées et pesées. Aucune perte massique n'a été observée.

### Exemple 2 . Traitement d'un mélange PET (90%) + PLA (10%)

Dans le cadre de cet exemple, un broyat de bouteilles en PET a été volontairement contaminé par un broyat de bouteilles en PLA à raison de 10%. Ce mélange mime une forte contamination qui pourrait être observée dans un flux de bouteilles en PET issu d'une filière de tri classique.
500 g de ce mélange de polymères a été mis dans un ballon de 2 litres afin de le traiter avec 1 kg de lactate d'éthyle, à pression atmosphérique, à une température de 130°C, sous agitation et pendant 1 heure.
Une fois ce traitement réalisé, la suspension a été filtrée afin de récupérer le PET. Le rétentat a été lavé à l'eau afin d'éliminer l'ester lactique résiduel et a ensuite été séché. Le polymère résiduel avait une masse après traitement de 450 g, masse correspondante à la quantité de PET dans le mélange initial.
Le filtrat quant à lui a subit une évaporation à 95°C et 100 mbars afin d'éliminer le lactate d'éthyle. En fin d'évaporation, un polymère a été récupéré. Celui-ci a été lavé abondamment à l'eau et ensuite séché. La masse récupérée était de 52,5 g. Ce polymère est ensuite été placé dans un bécher et plongé dans un bain d'huile à 185°C. Après 15 min la totalité de ce dernier se trouvait à l'état fondu. Cela prouve que la cinquantaine de grammes récupérés correspondent au PLA contaminant le mélange initial. En effet le PET à une température de fusion de 260°C, qui est bien supérieure aux 185°C appliqués lors du traitement.
Ce dernier exemple tend à prouver la possibilité de débarrasser complètement le mélange à traiter de son PLA contaminant. Le PET peut ensuite être réutilisé sans problème dans les filières recyclage mécanique.

## Revendications

1. Procédé de purification d'un mélange de polymères contenant une fraction pondérale d'au maximum 50% de poly(acide lactique) PLA, **caractérisé en ce qu'**il comprend:
a) une mise en suspension du mélange de polymères dans un ester lactique apte à dissoudre la fraction PLA ;
b) une séparation, d'une part, de l'ester lactique, du PLA et des autres impuretés dissoutes et, d'autre part, du mélange de polymères purifiés.

2. Procédé selon la revendication 1, **caractérisé en ce qu'**un broyage précède la mise en suspension/solubilisation.

3. Procédé selon l'une quelconque des revendications précédentes, **caractérisé en ce que** l'on effectue la mise en suspension du mélange de polymères dans un ester lactique avec un rapport pondéral polymère / ester lactique compris entre 0,1 et 1.

4. Procédé selon la revendication 3, **caractérisé en ce que** le rapport pondéral polymère / ester lactique est compris entre 0,5 et 1.

5. Procédé selon l'une quelconque des revendications précédentes, **caractérisé en ce que** l'on effectue la mise en suspension du mélange de polymères dans un ester lactique à une température comprise entre 50°C et la température de fusion du mélange de polymères.

6. Procédé selon l'une quelconque des revendications 1 à 4, **caractérisé en ce que** l'on effectue la mise en suspension du mélange de polymères dans un ester lactique à une température comprise entre 50°C et la température d'ébullition de cet ester lactique.

7. Procédé selon l'une quelconque des revendications précédentes, **caractérisé en ce que** l'on effectue la mise en suspension du mélange de polymères dans un ester lactique à une pression de service comprise entre 0,05 et 20 bars.

8. Procédé selon la revendication 7, **caractérisé en ce que** la pression de service est comprise entre 1 et 10 bars.

9. Procédé selon la revendication 7, **caractérisé en ce que** la pression de service est comprise entre 1 et 5 bars.

10. Procédé selon l'une quelconque des revendications précédentes, **caractérisé en ce que** l'ester lactique est choisi parmi les lactates d'alkyle dont le radical alkyle contient de 1 à 12 atomes de carbone.

11. Procédé selon la revendication 10, **caractérisé en ce que** le lactate d'alkyle est choisi parmi le lactate de méthyle, d'éthyle, de propyle, de butyle ou d'hexyle.

12. Procédé selon la revendication 1, **caractérisé en ce qu'**un lavage du mélange de polymères purifiés suit la séparation.

13. Procédé selon la revendication 1, **caractérisé en ce qu'**un séchage du mélange de polymères purifiés suit la séparation.

14. Procédé selon la revendication 1, **caractérisé en ce que** le mélange de polymères est d'origine pétrochimique.

## Patentansprüche

1. Verfahren zur Reinigung eines Polymergemischs, das eine Gewichtsfraktion von maximal 50 % Poly(milchsäure) PLA enthält, **dadurch gekennzeichnet, dass** es umfasst:
a) eine Suspension des Polymergemischs in einem Milchsäureester, der imstande ist, die PLA-Fraktion aufzulösen,
b) eine Separation einerseits des Milchsäureesters, der PLA und der anderen gelösten Unreinheiten und andererseits des gereinigten Polymergemischs.

2. Verfahren nach Anspruch 1, **dadurch gekennzeichnet, dass** der Suspension/Solubilisation eine Zerkleinerung vorausgeht.

3. Verfahren nach einem der vorangehenden Ansprüche, **dadurch gekennzeichnet, dass** die Suspension des Polymergemischs in einem Milchsäureester mit einem Gewichtsverhältnis Polymer/Milchsäureester zwischen 0,1 und 1 inklusive durchgeführt wird.

4. Verfahren nach Anspruch 3, **dadurch gekennzeichnet, dass** das Gewichtsverhältnis Polymer/Milchsäureester zwischen 0,5 und 1 inklusive ist.

5. Verfahren nach einem der vorangehenden Ansprüche, **dadurch gekennzeichnet, dass** die Suspension des Polymergemischs in einem Milchsäureester bei einer Temperatur zwischen 50 °C und der Fusionstemperatur des Polymergemischs inklusive durchgeführt wird.

6. Verfahren nach einem der Ansprüche 1 bis 4, **dadurch gekennzeichnet, dass** die Suspension des Polymergemischs in einem Milchsäureester bei einer Temperatur zwischen 50 °C und der Siedetemperatur dieses Milchsäureesters inklusive durchgeführt wird.

7. Verfahren nach einem der vorangehenden Ansprüche, **dadurch gekennzeichnet, dass** die Suspension des Polymergemischs in einem Milchsäureester bei einem Betriebsdruck zwischen 0,05 und 20 bar inklusive durchgeführt wird.

8. Verfahren nach Anspruch 7, **dadurch gekennzeichnet, dass** der Betriebsdruck zwischen 1 und 10 bar inklusive ist.

9. Verfahren nach Anspruch 7, **dadurch gekennzeichnet, dass** der Betriebsdruck zwischen 1 und 5 bar inklusive ist.

10. Verfahren nach einem der vorangehenden Ansprüche, **dadurch gekennzeichnet, dass** der Milchsäureester aus den Alkyllactaten ausgewählt ist, deren Alkylradikal 1 bis 12 Kohlenstoffatome enthält.

11. Verfahren nach Anspruch 10, **dadurch gekennzeichnet, dass** das Alkyllactat aus dem Methyl-, Ethyl-, Propyl-, Butyl- oder Hexyllactat ausgewählt ist.

12. Verfahren nach Anspruch 1, **dadurch gekennzeichnet, dass** der Separation eine Lavage des gereinigten Polymergemischs folgt.

13. Verfahren nach Anspruch 1, **dadurch gekennzeichnet, dass** der Separation eine Trocknung des gereinigten Polymergemischs folgt.

14. Verfahren nach Anspruch 1, **dadurch gekennzeichnet, dass** das Polymergemisch petrochemischen Ursprungs ist.

## Claims

1. A method for purifying a mixture of polymers containing a weight fraction of at most 50% of polylactic acid PLA **characterized in that** it comprises:
a. suspending the mixture of polymers in a lactic ester able to dissolve the PLA fraction;
b. separating the lactic ester from the PLA and from the other dissolved impurities on the one hand, and from the mixture of purified polymers.

2. The method according to claim 1, **characterized in that** middling precedes the suspension/solubilization.

3. The method according to any of the preceding claims, **characterized in that** the suspension of the mixture of polymers is carried out in a lactic ester with a polymer/lactic ester weight ratio comprised between 0.1 and 1.

4. The method according to claim 3, **characterized in that** the polymer/lactic ester weight ratio is comprised between 0.5 and 1.

5. The method according to any of the preceding claims, **characterized in that** the suspending of the mixture of polymers is carried out in a lactic ester at a temperature comprised between 50°C and the melting temperature of the mixture of polymers.

6. The method according to any of claims 1 to 4, **characterized in that** the suspending of the mixture of polymers is carried out in a lactic ester at a temperature comprised between 50°C and the boiling temperature of this lactic ester.

7. The method according to any of the preceding claims, **characterized in that** the suspending of the mixture of polymers is carried out in a lactic ester at an operating pressure comprised between 0.05 and 20 bars.

8. The method according to claim 7, **characterized in that** the operating pressure is comprised between 1 and 10 bars.

9. The method according to claim 7, **characterized in that** the operating pressure is comprised between 1 and 5 bars.

10. The method according to any of the preceding claims, **characterized in that** the lactic ester is selected from alkyl lactates, the alkyl radical of which contains from 1 to 12 carbon atoms.

11. The method according to claim 10, **characterized in that** the alkyl lactates is selected from methyl, ethyl, propyl, butyl or hexyl lactate.

12. The method according to claim 1, **characterized in that** a washing of the mixture of purified polymers follows separation.

13. The method according to claim 1, **characterized in that** drying of the mixture of purified polymers follows separation.

14. The method according to claim 1, **characterized in that** the mixture of polymers is of petrochemical origin.
